(19) Europäisches Patentamt
European Patent Office
Office européen des brevets

(11) **EP 1 145 483 B1**

(12) **FASCICULE DE BREVET EUROPEEN**

(45) Date de publication et mention
de la délivrance du brevet:
**23.10.2002 Bulletin 2002/43**

(51) Int Cl.[7]: **H04L 9/32**

(21) Numéro de dépôt: **00900666.9**

(86) Numéro de dépôt international:
**PCT/FR00/00174**

(22) Date de dépôt: **26.01.2000**

(87) Numéro de publication internationale:
**WO 00/045549 (03.08.2000 Gazette 2000/31)**

(54) **PROCEDE D'AUTHENTIFICATION OU DE SIGNATURE A NOMBRE DE CALCULS REDUIT**

AUTHENTIFIZIERUNGS- ODER UNTERSCHRIFTSVERFAHREN MIT VERRINGTER ZAHL AN
BERECHNUNGEN

AUTHENTICATING OR SIGNATURE METHOD WITH REDUCED COMPUTATIONS

(84) Etats contractants désignés:
**AT BE CH CY DE DK ES FI FR GB GR IE IT LI LU
MC NL PT SE**

(30) Priorité: **27.01.1999 FR 9900887**

(43) Date de publication de la demande:
**17.10.2001 Bulletin 2001/42**

(73) Titulaire: **FRANCE TELECOM
75015 Paris (FR)**

(72) Inventeurs:
• **GIRAULT, Marc
F-14000 Caen (FR)**
• **PAILLES, Jean-Claude
F-14610 Epron (FR)**

(74) Mandataire: **Poulin, Gérard et al
BREVALEX
3, rue du Docteur Lancereaux
75008 Paris (FR)**

(56) Documents cités:
**FR-A- 2 716 058       FR-A- 2 752 122**

• BRANDT J ET AL: "Zero-knowledge
authentication scheme with secret key
exchange" ADVANCES IN CRYPTOLOGY -
CRYPTO '88. PROCEEDINGS, SANTA
BARBARA, CA, USA, 21-25 AUG. 1988, pages
583-588, XP000090662 1990, Berlin, West
Germany, Springer-Verlag, West Germany ISBN:
3-540-97196-3

• FIAT A ET AL: "How to prove yourself: practical
solutions to identification and signature
problems" ADVANCES IN CRYPTOLOGY -
CRYPTO '86 PROCEEDINGS, SANTA
BARBARA, CA, USA, 11-15 AUG. 1986, pages
186-194, XP000090668 1987, Berlin, West
Germany, Springer-Verlag, West Germany ISBN:
3-540-18047-8 cité dans la demande

• KONIGS H -P: "Cryptographic identification
methods for smart cards in the process of
standardization" IEEE COMMUNICATIONS
MAGAZINE, JUNE 1991, USA, vol. 29, no. 6,
pages 42-48, XP002126721 ISSN: 0163-6804

• GUILLOU L C ET AL: "A practical
zero-knowledge protocol fitted to security
microprocessor minimizing both transmission
and memory" ADVANCES IN CRYPTOLOGY -
EUROCRYPT '88. WORKSHOP ON THE THEORY
AND APPLICATION OF CRYPTOGRAPHIC
TECHNIQUES. PROCEEDINGS, DAVOS,
SWITZERLAND, 25-27 MAY 1988, pages 123-128,
XP000562467 1988, Berlin, West Germany,
Springer-Verlag, West Germany ISBN:
3-540-50251-3 cité dans la demande

• QUISQUATER J -J ET AL: "Fast decipherment
algorithm for RSA public-key cryptosystem"
ELECTRONICS LETTERS, 14 OCT. 1982, UK, vol.
18, no. 21, pages 905-907, XP000577331 ISSN:
0013-5194 cité dans la demande

## Description

Domaine technique

La présente invention a pour objet un procédé d'authentification ou de signature à nombre de calculs réduit.

L'invention concerne plus précisément le domaine de la cryptographie dite à clé publique. Dans de tels procédés, l'entité à authentifier possède une clé secrète et une clé publique associée. L'entité authentifiante a uniquement besoin de cette clé publique pour réaliser l'authentification.

L'invention concerne plus précisément encore le domaine des procédés d'authentification dits à connaissance nulle ou sans apport de connaissance ("zero-knowledge"). Dans ce type de procédé, l'authentication se déroule suivant un protocole qui, de façon prouvée, et sous des hypothèses reconnues comme parfaitement raisonnables par la communauté scientifique, ne révèle rien sur la clé secrète de l'entité à authentifier.

Plus précisément encore, l'invention concerne des procédés sans apport de connaissance basés sur le problème de la factorisation (c'est-à-dire sur la difficulté de décomposer de grands entiers en un produit de nombres premiers).

L'invention trouve une application dans tous les systèmes nécessitant d'authentifier des entités ou des messages, ou de signer des messages, et plus particulièrement dans les systèmes où le nombre de calculs effectués par l'entité authentifiée constitue un paramètre critique. C'est notamment le cas des cartes à microcircuit standards ou à bas coût, non pourvues d'un coprocesseur arithmétique (appelé souvent cryptoprocesseur) pour accélérer les calculs cryptographiques.

Une application typique de l'invention est le porte-monnaie électronique, qui requiert un très haut niveau de sécurité, tout en excluant l'usage d'un cryptoprocesseur, soit pour des raisons de coût, soit pour des raisons techniques (par exemple l'utilisation d'une interface sans contact), soit pour les deux.

Une autre application possible est la télécarte de future génération, pour laquelle les contraintes de coût sont encore bien plus sévères que pour le porte-monnaie électronique.

Etat de la technique antérieure

De nombreux protocoles d'identification du type sans apport de connaissance sont connus. On peut citer, par exemple :

- le protocole de FIAT-SHAMIR décrit dans l'article de A. FIAT et A. SHAMIR intitulé "How to prove yourself : Practical solutions to identification and signature problems", publié dans "Advances in Cryptology : Proceedings of CRYPTO'86, Lecture Notes in Computer Science", vol. 263, Springer-Verlag, Berlin, 1987, pp. 186-194,

- le protocole de GUILLOU-QUISQUATER décrit dans l'article de L.C. GUILLOU et J.J. QUISQUATER, intitulé "A practical zero-knowledge protocole fitted to security microprocessors minimizing both transmission and memory", publié dans "Advances in Cryptology : Proceedings of EUROCRYPT'88, Lecture Notes in Computer Science", vol. 330, Springer-verlag, Berlin, 1988, pp. 123-128,

- le protocole de GIRAULT décrit dans la demande de brevet français FR-A-2 716 058, basé sur le problème dit du logarithme discret.

De façon générale, la plupart des protocoles d'identification (ou d'authentification de message) à apport nul de connaissance se déroulent en trois échanges. On supposera, afin de simplifier la description, que l'entité authentifiante B connaît déjà tous les paramètres publics caractéristiques de l'entité à authentifier A, à savoir son identité, sa clé publique, etc..

Lors du premier échange, A fournit à B une valeur c dite "engagement", image par une fonction pseudo-aléatoire h d'un paramètre x (lui-même calculé à partir d'un nombre r choisi au hasard par A), ainsi que, s'il y a lieu, du message à authentifier ou à signer : $c=h(x, [M])$ où la notation [M] exprime que M est optionnel. C'est la première étape. Dans certains protocoles, il peut y avoir plusieurs engagements.

Lors d'un deuxième échange, B envoie à A un paramètre e choisi au hasard (la "question"). C'est la deuxième étape.

Lors du troisième échange, A fournit à B une "réponse" y, cohérente avec la question e, l'engagement c et la clé secrète v de A (troisième étape).

Enfin, B contrôle la réponse reçue. Plus précisément, B recalcule x à partir des éléments y, e et v par $x=\varphi(y,e,v)$ ; puis il vérifie que : $c=h(\varphi(v,e,y), [M])$ (quatrième étape).

Dans le cas où il n'y a pas de message à authentifier, le recours à la fonction pseudo-aléatoire h est optionnel. On peut prendre alors $c=x$. La vérification consiste alors à vérifier que $x=\varphi(y,e,v)$.

Dans certains protocoles, il y a un ou deux échanges supplémentaires entre les entités à authentifier et authentifiante.

Dans le cas d'une signature de message, les deux premiers échanges sont supprimés, car le paramètre e est choisi égal à c ; A calcule alors successivement, et seul, c, e(=c) et y.

Le nombre u de questions possibles est directement relié au niveau de sécurité du protocole. Ce dernier est défini comme la probabilité p de détection d'un imposteur (c'est-à-dire d'une entité C qui tente frauduleusement de se faire passer pour A), et est caractérisé par un paramètre k. Les nombres p et k sont reliés par l'égalité : $p=1-2^{-k}$. En d'autres termes, l'imposteur n'a qu'une chance sur $2^k$ de réussir son imposture. Dans le cas présent, on peut montrer que, si le protocole repose sur un problème mathématique difficile, et si les engagements sont de longueur suffisante, alors il suffit que la longueur de u soit égale à k bits. Typiquement, k est égal à 32 bits, ce qui donne seulement une chance sur quatre milliards de réussir une imposture. Dans les applications où l'échec d'une identification peut avoir des conséquences très néfastes (poursuite judiciaire par exemple), cette longueur peut être réduite à quelques bits.

Dans les protocoles basés sur la factorisation, le calcul de x à partir de r, ou le calcul de y à partir de e, ou les deux, implique(nt) des opérations modulo n où n est un nombre composé difficile à factoriser. Ce nombre est de type universel, c'est-à-dire généré par une tierce partie de confiance, mémorisé et utilisé par toutes les entités qui y sont rattachées. Le caractère universel de n implique qu'il est de très grande taille (typiquement 1024 bits), car la découverte de la factorisation de n compromettrait les clés secrètes de tous les utilisateurs.

Dans leur version de base, aucun des protocoles mentionnés plus haut ne peut être mis en oeuvre dans une application soumise à de fortes contraintes, (bas coût, faible complexité) telles que décrites dans la section précédente, car les calculs requis ne pourraient être effectués par une carte à microcircuit qui ne serait pas dotée d'un cryptoprocesseur.

La demande de brevet français FR-A-2 752 122 décrit bien une optimisation de ces protocoles, mais cette optimisation reste limitée aux protocoles basés sur le logarithme discret dans un mode dit "à précalculs" qui présente l'inconvénient d'impliquer des rechargements à intervalles réguliers.

Le document J. BRANDT et al. intitulé "Zero-knowledge Authentication Scheme with Secret Key Exchange" publié dans Advances in Cryptology-Crypto 88 Proceedings, XP 000090662, pages 583-588, décrit un schéma d'authentification sans apport de connaissance, avec échange de clé secrète entre deux utilisateurs, schéma dans lequel l'entité à authentifier calcule son propre module n=pq et met en oeuvre une opération du type $m^d$ (mod n).

La présente invention vise à réduire le nombre de calculs effectués par l'entité authentifiée dans les protocoles d'identification (ou d'authentification de message ou de signature de message) sans apport de connaissance basés sur la factorisation, cette réduction pouvant atteindre un facteur 2 ou 3 dans le cadre d'une opération particulière du type $v=s^{-t}$ (mod n).

Elle rend ainsi possible, et plus particulièrement quand on le couple avec le protocole Guillou-Quisquater, l'exécution rapide d'un algorithme d'identification (ou d'authentification de message ou de signature de message) à clé publique dans une carte à microcircuit standard à bas coût, pour des applications telles que le porte-monnaie électronique ou la télécarte de future génération.

Exposé de l'invention

Le module n étant un paramètre de type individuel (en d'autres termes, chaque utilisateur possède sa propre valeur de n), on peut exploiter ce choix des deux manières suivantes, (qui peuvent d'ailleurs être avantageusement combinées) :

1) d'abord en choisissant une taille de n inférieure à la valeur usuelle (typiquement inférieure à 1000 et par exemple comprise entre 700 et 800) ; cela est possible car la découverte de la factorisation de n ne compromet plus que la clé secrète de l'utilisateur correspondant et en aucune façon celle des autres ; cette seule modification permet de réduire déjà d'environ 40% la durée des calculs effectués modulo n ;
2) si l'utilisateur a conservé les facteurs premiers de n dans la mémoire de son dispositif de sécurité, on peut mettre en oeuvre la technique dite des restes chinois, pour réduire encore d'environ 40% la durée des calculs effectués modulo n, lorsque le nombre de facteurs premiers est 2 ; cette réduction peut être encore amplifiée en utilisant plusieurs facteurs premiers (typiquement 3 ou 4).

Au total, on peut donc réduire les temps de calcul modulo n d'au moins 60%, c'est-à-dire d'au moins un facteur 2.

De façon précise, l'invention a pour objet un procédé d'authentification mettant en oeuvre une première entité dite "à authentifier", possédant une clé publique $\underline{v}$ et une clé secrète $\underline{s}$, ces clés étant reliées par une opération modulo $\underline{n}$ où $\underline{n}$ est un entier appelé module qui est propre à l'entité à authentifier, et une seconde entité dite "authentifiante", connaissant la clé publique $\underline{v}$, ces entités comprenant des moyens aptes à échanger des informations du type à apport nul de connaissance et à effectuer des calculs cryptographiques portant sur ces informations, certains calculs étant effectués modulo $\underline{n}$, ce procédé étant caractérisé en ce que le module l'opération modulo n est du type $v=s^{-t}$ (mod n), t étant un paramètre.

Les entités dont il est question peuvent être, par exemple des cartes à microcircuit, des porte-monnaie électroniques, des télécartes, etc ...

Dans un mode de mise en oeuvre avantageux, les échanges d'informations du type à apport nul de connaissance et les calculs cryptographiques sont les suivants :

- l'entité à authentifier choisit au hasard un (des) nombre(s) entier(s) $\underline{r}$ compris entre 1 et n-1 et calcule un (des) paramètre(s) $\underline{x}$ égal (égaux) à $r^t$(mod n), puis un (des) nombre(s) $\underline{c}$ appelé(s) engagement(s) qui est (sont) une (des) fonction(s) de ce (ces) paramètre(s) et éventuellement d'un message (M), et envoie cet (ces) engagement(s) à l'entité authentifiante ;

- l'entité authentifiante reçoit le ou les engagement(s) $c$, choisit au hasard un nombre $e$ appelé "question" et envoie cette question à l'entité à authentifier ;
- l'entité à authentifier reçoit la question $e$, effectue un (des) calcul(s) utilisant cette question $e$ et la clé secrète $s$, le résultat de ce (ces) calcul(s) constituant une (des) réponse(s) $y$, et envoie cette (ces) réponse(s) à l'entité authentifiante ;
- l'entité authentifiante reçoit la (les) réponse(s) $y$, effectue un calcul utilisant la clé publique $v$ et le module n, et vérifie par une opération modulo $n$ que le résultat de ce calcul est bien cohérent avec le (les) engagement(s) reçu(s).

La taille du nombre n, exprimée en nombre de bits, est inférieure à 1000. Elle peut être, par exemple, comprise entre 700 et 800.

La présente invention a également pour objet un procédé de signature de message par une entité dite "signataire", cette entité possédant une clé publique $v$ et une clé secrète $s$, ces clés étant reliées par une opération modulo n où $n$ est un entier appelé "module" et $t$ un paramètre, procédé dans lequel l'entité signataire calcule un engagement $c$ fonction notamment du message à signer et un nombre $y$ fonction de la clé secrète, émet les nombres $y$ et $c$ qui constituent la signature du message et le message, ce procédé étant caractérisé en ce que le module $n$ est propre au signataire.

Dans un mode de mise en oeuvre avantageux, le signataire choisit au hasard un nombre entier $r$ compris entre 1 et n-1, calcule un paramètre $x$ égal à $r^t$(mod n), calcule un nombre $c$ fonction du paramètre $x$ et du message à signer, calcule un nombre $y$ à l'aide de sa clé secrète $s$ et fonction des nombres $r$ et $e$, et émet les nombres $c$ et $y$ comme signature.

<u>Description détaillée de modes particuliers de mise en oeuvre de l'invention</u>

Dans la description qui suit, l'invention est supposée être appliquée au protocole GUILLOU-QUISQUATER mais, naturellement, il ne s'agit là que d'un exemple et l'invention n'est nullement limitée à ce protocole.

On rappelle que dans le protocole de GUILLOU-QUISQUATER, les paramètres universels sont le module n, produits de nombres premiers et comprenant au moins 1024 bits, et un nombre $t$ entier.

La clé publique $v$ et la clé secrète $s$ sont reliées par l'équation : $v=s^{-t}$(mod n).

Le niveau de sécurité choisi est $u$ (inférieur ou égal à $t$, et le plus souvent, u=t).

L'authentification de A par B, que l'on peut appeler respectivement Alice et Bob selon la terminologie en usage, se déroule comme suit :

1. Alice choisit r dans l'intervalle [1,n-1], calcule $x=r^t$ (mod n) puis c=h(x, [M]) et envoie c à Bob.
2. Bob choisit e dans l'intervalle [0,u-1] et envoie e à Alice.
3. Alice calcule $y=rs^e$(mod n) et envoie y à Bob.
4. Bob calcule $x=y^t v^e$(mod n) et vérifie que c=h(x, [M])

Dans le cas où il n'y a pas de message à authentifier, le recours à la fonction pseudo-aléatoire h est optionnel : on peut prendre c=x. La vérification consiste alors à vérifier que $x=y^t v^e$(modulo n).

Avec le protocole modifié selon l'invention, le seul paramètre universel est t.

La clé publique est (n,v), où n a au moins 768 bits. La clé publique v et la clé secrète s d'Alice sont reliées par l'équation : $v=s^{-t}$(mod n).

La clé secrète peut aussi inclure les facteurs premiers de n afin de bénéficier du deuxième volet de l'invention.

Le paramètre t peut être inclus dans la clé publique (dans ce cas, il n'y a plus de paramètre universel).

Le niveau de sécurité choisi par Alice et Bob est u (inférieur ou égal à t ; souvent u=t).

L'authentification d'Alice par Bob se déroule comme décrit plus haut, mais avec des calculs plus rapides grâce à un module plus petit.

Puisque tous les calculs d'Alice sont effectués modulo n, le facteur de gain obtenu sur une unique multiplication modulaire se répercute sur l'ensemble des calculs effectués par Alice durant l'exécution du protocole. Il en serait de même avec les protocoles de Fiat-Shamir ou de Girault par exemple (dans ce dernier cas, il n'y a pas de gain dans l'étape 3 puisqu'il n'y a plus de calculs modulaires, mais de toute façon le temps d'exécution de cette étape est négligeable par rapport à l'exponentiation modulaire de la première étape).

L'invention peut également être mise en oeuvre par la technique dite des restes chinois, qui consiste à effectuer les calculs modulo chacun des nombres premiers composant n. Comme ces nombres sont nécessairement beaucoup plus petits, ces calculs sont rapides. Il reste à calculer le résultat modulo n à l'aide d'une opération dite de reconstitution. Cette technique est décrite dans l'article de J.J QUISQUATER et C. COUVREUR, intitulé "Fast decipherment algorithm for RSA public-key cryptosystem", publié dans "Electronic Letters", vol. 18, Octobre 1982, pp. 905-907.

On considère donc le cas où n est le produit de deux facteurs premiers p et q.

D'après le théorème de Bezout, il existe deux entiers a et b tels que ap+bq=1.

Pour calculer $y=x^e$(mod n), on commence par "réduire" x modulo chacun des nombres premiers en calculant $x_p=x$(mod p) et $x_q=x$(mod q). On réduit également e modulo (p-1) et (q-1) en calculant $e_p=e$mod(p-1) et $e_q=e$mod(q-1). (Dans le protocole de Guillou-Quisquater, e est toujours inférieur à p-1 et q-1 et par conséquent ep=eq=e).

On calcule alors $y_p=x^{e_p}$ (mod p) et $y_q=x^{e_q}$ (mod q) . Quand p et q sont de tailles semblables, chacun de ces calculs est environ 8 fois plus rapide que le calcul $y=x^e$(mod n) quand la taille de e est celle de n (premier cas) ; 4 fois plus rapide quand elle est inférieure ou égale à celle de p (deuxième cas comme par exemple dans l'algorithme). L'ensemble des deux calculs est donc, soit 4 fois plus rapide, soit 2 fois plus rapide.

Il reste à reconstituer y à partir de $y_p$ et $y_q$, ce qui est réalisé par l'opération :

$$y=y_p+ap(y_q-y_p) \text{ (mod n)}$$

Au total, la méthode des restes chinois permet d'accélérer le calcul d'un facteur compris entre 3 et 4 dans le premier cas, entre 1,5 et 2 dans le deuxième cas. Lorsque le nombre de facteurs premiers (supposés de tailles semblables) est supérieure à 2 et égal à k, le facteur d'accélération est proche de $k^2$ dans le premier cas, proche de k dans le deuxième cas.

## Revendications

1. Procédé d'authentification mettant en oeuvre une première entité dite "à authentifier" (A), possédant une clé publique $\underline{v}$ et une clé secrète $\underline{s}$, ces clés étant reliées par une opération modulo $\underline{n}$ où $\underline{n}$ est un entier appelé module, le module $\underline{n}$ étant propre à l'entité à authentifier (A), et une seconde entité dite "authentifiante" (B), connaissant la clé publique $\underline{v}$, ces entités, comprenant des moyens aptes à échanger des informations du type à apport nul de connaissance et à effectuer des calculs cryptographiques portant sur ces informations, certains calculs étant effectués modulo $\underline{n}$, ce procédé étant **caractérisé en ce que** l'opération modulo $\underline{n}$ est du type $v=s^{-t}$ (mod n), t étant un paramètre.

2. Procédé selon la revendication 1, dans lequel les échanges d'informations du type à apport nul de connaissance et les calculs cryptographiques sont les suivants :

   - l'entité à authentifier (A) choisit au hasard un (des) nombre(s) entier(s) $\underline{r}$ compris entre 1 et n-1 et calcule un (des) paramètre(s) (x) égal (égaux) à $r^t$(mod n), puis un (des) nombre(s) $\underline{c}$ appelé(s) engagement(s) qui est (sont) une (des) fonction(s) de ce (ces) paramètre(s) et éventuellement d'un message (M), et envoie cet (ces) engagement(s) à l'entité authentifiante (B) ;
   - l'entité authentifiante (B) reçoit le ou les engagement(s) $\underline{c}$, choisit au hasard un nombre $\underline{e}$ appelé "question" et envoie cette question à l'entité à authentifier (A) ;
   - l'entité à authentifier (A) reçoit la question $\underline{e}$, effectue un (des) calcul(s) utilisant cette question $\underline{e}$ et la clé secrète $\underline{s}$, le résultat de ce (ces) calcul(s) constituant une (des) réponse(s) $\underline{y}$, et envoie cette (ces) réponse(s) à l'entité authentifiante (B) ;
   - l'entité authentifiante (B) reçoit la (les) réponse(s) $\underline{y}$, effectue un calcul utilisant la clé publique $\underline{v}$ et le module $\underline{n}$, et vérifie par une opération modulo $\underline{n}$ que le résultat de ce calcul est bien cohérent avec le (les) engagement(s) reçu(s).

3. Procédé selon la revendication 2, dans lequel la taille du nombre n, exprimée en nombre de bits, est inférieure à 1 000.

4. Procédé selon la revendication 3, dans lequel la taille du nombre n est comprise entre 700 et 800.

5. Procédé selon l'une quelconque des revendications 1 à 4, dans lequel $\underline{n}$ est le produit d'au moins deux nombres premiers (p, q) et dans lequel les opérations modulo n sont effectuées par la méthode dite "des restes chinois".

6. Procédé de signature de message par une entité dite "signataire" (A), cette entité possédant une clé publique $\underline{v}$ et une clé secrète $\underline{s}$, ces clés étant reliées par une opération modulo n où $\underline{n}$ est un entier appelé "module" qui est propre au signataire, comprenant des moyens aptes à calculer un engagement $\underline{c}$ fonction notamment du message à signer M et un nombre $\underline{y}$ fonction de la clé secrète, à émettre les nombres $\underline{y}$ et $\underline{c}$ qui constituent la signature du message M et le message M, ce procédé étant **caractérisé en ce que** l'opération modulo n est l'opération $v=s^{-t}$ (mod n), t étant un paramètre.

7. Procédé de signature selon la revendication 6, dans lequel le signataire choisit au hasard un nombre entier $\underline{r}$ compris entre 1 et n-1, calcule un paramètre $\underline{x}$ égal à $r^t$(mod n), calcule un nombre $\underline{c}$ fonction du paramètre $\underline{x}$ et du message à signer M, calcule un nombre $\underline{y}$ à l'aide de sa clé secrète $\underline{s}$ et fonction des nombres $\underline{r}$ et $\underline{e}$, et émet les nombres $\underline{c}$ et $\underline{y}$ comme signature.

## Claims

1. Authentication process involving a first entity called a "prover" (A), which possesses a public key $\underline{v}$ and a secret key $\underline{s}$, these keys being related y an operation modulo $\underline{n}$, where $\underline{n}$ is an integer called modulus, and a second entity called a "verifier" (B), which knows the public key $\underline{v}$, wherein these entities are provided with means to exchange zero-knowledge information and carry out cryptographic calculations on this information, some calculations being carried out modulo n, the process being **characterized in that** the modulo $\underline{n}$ operation is of the type $v=s^{-t}$ (mod n), t being a parameter.

2. Process according to claim 1, wherein the information exchanges are of zero-knowledge type and the cryptographic calculations are as follows:

   · the prover (A) selects one (several) integer(s) $\underline{r}$ at random, ranging between 1 and n-1 and calculates one (several) parameter(s) (x) equal to $r^t$ (mod n), then one (several) number(s) $\underline{c}$ called opening(s) which is (are) one (several) function(s) of this (these) parameter(s) and possibly of a message (M), and sends this (these) opening(s) to the verifier (B):
   · the verifier entity (B) receives the opening(s) $\underline{c}$, selects one number e at random called "question" and sends this question to the prover (A);
   · the prover (A) receives the question $\underline{e}$, carries out one (several) calculation(s) using this question $\underline{e}$ and the secret key $\underline{s}$, the result of this (these) calculation(s) yielding one (several) answer(s) $\underline{y}$ and sends this (these) answer(s) to the verifier (B);
   · the verifier (B) receives the answer(s) $\underline{y}$, carries out one calculation using the public key $\underline{v}$ and the modulus $\underline{n}$, and checks with a modulo $\underline{n}$ calculation that the result is coherent with the received opening(s).

3. Process according to claim 2, wherein the size of the number n, expressed in number of bits, is less than 1,000.

4. Process according to claim 3, wherein the size of the number n is between 700 and 800.

5. Process according to any of claims 1 to 4, wherein $\underline{n}$ is the product of at least two primes (p and q) and wherein the modulo n calculations are performed according to the method called "Chinese remainders".

6. Message signature process intended for a signatory (A) provided with a public key $\underline{v}$ and a secret key $\underline{s}$, wherein these keys are related via a modulo n calculation, where $\underline{n}$ is an integer called modulus, the said process involving means to calculate an opening $\underline{c}$ that is notably function of the message M to be signed, able to calculate a number $\underline{y}$ that is a function of the secret key, and able to transmit the numbers $\underline{y}$ and $\underline{c}$ that are the signature of the message M and to transmit the message M, the process being **characterized in that** the modulo n operation is the operation $v=s^{-t}$ (mod n), t being a parameter.

7. Signature process according to claim 6, wherein the signatory selects an integer $\underline{r}$ at random between 1 and n-1, calculates a parameter $\underline{x}$ equal to $r^t$ (mod n), calculates a number $\underline{c}$ that is a function of parameter $\underline{x}$ and message M to be signed, calculates a number $\underline{y}$ using its secret key $\underline{s}$, the said number $\underline{y}$ being a function of numbers $\underline{r}$ and $\underline{e}$, and transmits the numbers $\underline{c}$ and $\underline{y}$ as signature.

**Patentansprüche**

1. Authentifizierungsverfahren, das eine erste, "zu authentifizierende" Einheit (A), welche eine öffentlichen Schlüssel $\underline{v}$ und einen Geheimschlüssel $\underline{s}$ besitzt, wobei diese Schlüssel durch eine Operation modulo n verbunden sind, wobei $\underline{n}$ eine Modul genannte ganze Zahl ist, und der Modul $\underline{n}$ der zu authentifizierenden Einheit A eigen ist, sowie eine zweite, "authentifizierende" Einheit (B), welche den öffentlichen Schlüssel $\underline{v}$ kennt, verwendet, wobei diese Einheiten Einrichtungen umfassen, die Informationen vom Typ mit Null-Beitrag an Kenntnis bzw. Wissen austauschen können und auf diese Informationen gestützt, kryptographische Berechnungen ausführen können, wobei bestimmte Berechnungen modulo $\underline{n}$ ausgeführt werden, wobei dieses Verfahren **dadurch gekennzeichnet ist, daß** die Operation modulo $\underline{n}$ vom Typ $v=s^{-t}$ (mod n) ist, wobei t ein Parameter ist.

2. Verfahren nach Anspruch 1, wobei die Informationsaustausche vom Typ mit Nullbeitrag an Kenntnis bzw. Wissen und die kryptographischen Berechnungen die folgenden sind:

   • Die zu authentifizierende Einheit (A) wählt zufällig eine oder mehrere ganze Zahlen $\underline{r}$, die zwischen 1 und n-1 liegen, und berechnet einen (der) Parameter (x) gleich $r^t$ (mod n), und dann eine Zahl bzw. Zahlen $\underline{c}$, die Zusage(n) (engagement(s)) genannt wird/werden, und eine Funktion bzw. Funktionen dieser/dieses Parameter(s) und eventuell einer Nachricht (M) ist/sind, und schickt diese Zusage(n) an die authentifizierende Einheit (B);
   • die authentifizierende Einheit (B) empfängt die Zusage(n) $\underline{c}$, wählt zufällig eine Zahl $\underline{e}$, als "Frage" bezeichnet, und sendet diese Frage der zu authentifizierenden Einheit (A);
   • die zu authentifizierende Einheit (A) empfängt die Frage $\underline{e}$, führt eine Berechnung bzw. Berechnungen unter Verwendung dieser Frage $\underline{e}$ und des geheimen Schlüssels $\underline{s}$ aus, wobei das Ergebnis dieser Berechnung(en) eine Antwort bzw. Antworten $\underline{y}$ bildet, und sendet diese Antwort(en) der authentifizierenden Einheit (B);

- die authentifizierende Einheit (B) empfängt die Antwort(en) y, führt eine Berechnung unter Verwendung des öffentlichen Schlüssels v und des Moduls n aus, und überprüft durch eine Operation modulo n, ob das Ergebnis dieser Berechnung kohärent mit der/den empfangenen Zusage(n) ist.

3. Verfahren nach Anspruch 2, wobei die Größe der Zahl n, als Zahl der Bits ausgedrückt, unter 1000 liegt.

4. Verfahren nach Anspruch 3, wobei die Größe der Zahl n zwischen 700 und 800 liegt.

5. Verfahren nach einem der Ansprüche 1 bis 4, wobei n das Produkt aus mindestens zwei Primzahlen (p, q) ist, und wobei die Operationen modulo n mit dem sogenannten Verfahren "der chinesischen Reste" ausgeführt werden.

6. Nachrichten-Signaturverfahren durch eine sogenannte "signierende" Einheit (A), wobei diese Einheit einen öffentlichen Schlüssel v und einen geheimen Schlüssel s besitzt, wobei diese Schlüssel durch eine Operation modulo n verbunden sind, wobei n eine als "Modul" bezeichnete ganze Zahl ist, die dem Signierenden eigen ist, wobei das Verfahren Einrichtungen umfaßt, welche eine Verbindlichkeit c, die insbesondere Funktion der zu signierenden Nachricht M ist, sowie eine Zahl y, die eine Funktion des geheimen Schlüssels ist, berechnen und die Zahlen y und c, die die Signatur der Nachricht M und die Nachricht M darstellen, senden können, wobei dieses Verfahren **dadurch gekennzeichnet ist, daß** die Operation modulo n die Operation $v=s^{-t}$ (mod n) ist, wobei t ein Parameter ist.

7. Signaturverfahren nach Anspruch 6, wobei der Signierende zufällig eine ganze Zahl r wählt, die zwischen 1 und n-1 liegt, einen Parameter x gleich $r^t$ (mod n) berechnet, eine Zahl c als Funktion des Parameters x und der zu signierenden Nachricht M berechnet, eine Zahl y mit Hilfe seines geheimen Schlüssels s und als Funktion der Zahlen r und e berechnet und die Zahlen c und y als Signatur sendet.